# FASCICULE DE BREVET EUROPEEN

(11) **EP 1 498 705 B1**
(45) Date de publication et mention de la délivrance du brevet: **13.12.2006**
(21) Numéro de dépôt: 04291675.9
(22) Date de dépôt: 02.07.2004
(51) Int. Cl.: G01G 19/56, D06F 39/00

(54) **Procédé et dispositif de pesage pour machine à laver, utilisation dans un système de traçabilité**
Verfahren und Einrichtung zum Wiegen für eine Waschmaschine und dessen Verwendung in einem System zur Ablaufverfolgung
Method and device for weighing for a washing machine and its use in a system for tracing

(30) Priorité: 18.07.2003 FR 0308849
(43) Date de publication de la demande: 19.01.2005
(73) Titulaire: Danube International, 75008 Paris (FR)
(72) Inventeur: Jomard, Bernard, 75003 Paris (FR); Sauger, Patrice, 41220 Dhuizon (FR)
(74) Mandataire: Debay, Yves

(56) Documents cités:
- DE-A- 3 933 785
- DE-B- 1 157 578
- US-A- 5 165 260

## Description

La présente invention se rapporte au domaine de la blanchisserie. L'invention concerne plus particulièrement un dispositif et un procédé de pesage pour machine à laver ainsi qu'une utilisation du dispositif dans un système de traçabilité.

Les machines à laver utilisées dans les blanchisseries, notamment dans les collectivités (hôtels, hôpitaux, maisons d'arrêt...), nécessitent de bien connaître la charge de linge introduite pour permettre ensuite la réalisation d'un dosage précis de l'eau et des produits lessiviels. L'utilisation de balances par du personnel de la blanchisserie pour peser le linge sale avant introduction en machine s'avère une solution fastidieuse exigeant de nombreuses manipulations.

Il est connu dans l'art antérieur d'utiliser des systèmes de détermination indirecte de la quantité d'eau et de linge dans la cuve de la machine, par détection du déplacement de la cuve. Il est également connu des appareils de détermination indirecte de la quantité de linge par un calcul de l'effort fourni par le moteur de la machine après démarrage d'un cycle de lavage. Ce type d'appareils est réservé au domaine ménager. Un inconvénient de ces méthodes de détermination indirecte est que la charge de linge n'est déterminée qu'après démarrage d'un cycle. De plus, la précision de tels systèmes n'est pas élevée, avec des marges d'erreur de l'ordre de 20%.

Par ailleurs, il est connu dans l'art antérieur des machines à laver pourvues de quatre pieds à capteur de pesée soulevant l'ensemble de la machine. Un tel système de pesée est coûteux et empêche de fixer la machine à laver au sol. En outre, le risque de vibrations est considérablement augmenté lors du fonctionnement de la machine à laver. Des machines à laver avec des capteurs de poids sont connues de l'art antérieur dans les documents US-A-5165260, DE-B-1157578, DE-A-3933785.

La présente invention a donc pour objet de pallier un ou plusieurs des inconvénients de l'art antérieur en définissant un dispositif de pesage pour machine à laver de conception plus simple et permettant de peser directement et de manière précise la cuve et son contenu.

A cet effet, l'invention concerne un dispositif de pesage pour machine à laver du type équipée d'une cuve surélevée ayant un degré de liberté selon une composante verticale, ledit dispositif comprenant un moyen de levage actionné par un organe de commande, un capteur de force et une interface utilisateur reliée à une unité de traitement, caractérisé en ce que le moyen de levage comprend une extrémité libre supérieure supportant le capteur de force, l'unité de traitement contrôlant l'organe de commande pour que le moyen de levage s'élève d'une position basse à une position haute déterminée où le capteur de force est en appui par au moins un point d'appui avec le dessous de cuve de la machine à laver, des moyens de conversion étant connectés à une sortie électrique du capteur de force pour transformer un signal représentatif du poids de la cuve avec son contenu en des données représentatives de la charge introduite dans la cuve, les données représentatives de la charge étant transmises à des moyens d'acquisition de l'unité de traitement.

Selon une autre particularité de l'invention, le moyen de levage comporte un vérin à moteur électrique pourvu d'une vis sans fin commandé en montée et en descente par l'organe de commande.

Selon une autre particularité de l'invention, le vérin électrique est calé sur un support pourvu d'au moins un longeron sensiblement horizontal et d'un dispositif mobile verticalement le long d'au moins un rail, le dispositif mobile étant rendu solidaire de l'extrémité supérieure du vérin pour former un dispositif anti-rotation pour le vérin.

Selon une autre particularité de l'invention, le capteur de force comprend un corps d'épreuve et au moins une jauge extensiométrique solidaire du corps d'épreuve pour mesurer la déformation mécanique de ce dernier.

Selon une autre particularité de l'invention, le capteur de force comprend un corps d'épreuve constitué d'un barreau en S auquel est collée au moins une jauge de contrainte active mesurant la flexion du corps d'épreuve.

Selon une autre particularité de l'invention, l'interface utilisateur comprend un moyen d'affichage d'informations représentatives des données de charge introduite et des moyens de déclenchement d'une pesée actionnables lorsque le moyen de levage est dans une position basse.

Selon une autre particularité, la sortie électrique du capteur de force fournit un signal de tension, compris entre 0 et 10V, représentatif du poids exercé sur le capteur, le signal de tension étant transformé de manière continue en données de charge par les moyens de conversion, l'unité de traitement comprenant un programme d'exploitation des données de charge pour extraire une première mesure après écoulement d'un intervalle de temps déterminé prévu pour le tarage de la cuve à vide, puis utiliser cette première mesure pour faire le zéro et permettre d'afficher sur le moyen d'affichage des mesures représentatives de la charge ajoutée dans la cuve.

Selon une autre particularité, la cuve est suspendue à un châssis par des moyen amortisseurs et la disposition du capteur de force en position basse du moyen de levage correspond à un déplacement supérieur au déplacement maximal de la cuve permis par les moyens amortisseurs.

Un autre objet de l'invention est de fournir un procédé de pesage précis réalisé de manière directe du linge introduit dans une machine à laver.

A cet effet, l'invention concerne un procédé de pesage pour machine à laver du type équipée d'une cuve surélevée ayant un degré de liberté selon une composante verticale, mis en oeuvre par l'intermédiaire du dispositif de pesage selon l'invention, ledit procédé étant caractérisé en ce qu'il comprend avant le chargement de la machine à laver les étapes successives suivantes :
- utilisation de l'interface utilisateur par un opérateur pour déclencher une pesée,
- montée du moyen de levage actionné par l'organe de commande vers une position haute déterminée pour amener le capteur de force en appui par au moins un point d'appui avec le dessous de cuve de la machine à laver,
- tarage de la cuve par au moins une première mesure du capteur réalisée après écoulement d'un intervalle de temps déterminé à partir de la mise en appui du capteur de force sous la cuve, la première mesure étant utilisée par l'unité de traitement pour mettre à zéro des informations représentatives des données de charge introduite dans la cuve, les données de charge étant affichées sur un moyen d'affichage de l'interface utilisateur,
puis après chargement de la machine à laver et avant alimentation en eau, une étape de détermination par l'unité de traitement de la charge introduite dans la cuve par traitement d'au moins une seconde mesure réalisée par le capteur de force, et une étape de désengagement du capteur de force par actionnement en descente du moyen de levage.

Selon une autre particularité, la charge déterminée avant alimentation en eau est prise en compte par un automate de gestion des cycles de lavage de la machine à laver pour calculer la quantité d'eau à fournir et optimiser ainsi le rapport de charge.

Selon une autre particularité, l'intervalle de temps déterminé correspond sensiblement au temps de stabilisation de la valeur mesurée pour le poids de la cuve avant chargement.

Un autre but de l'invention est de permettre une utilisation du dispositif de pesage dans un système de traçabilité du linge.

Ce but est atteint par une utilisation du dispositif de pesage selon l'invention dans un système de traçabilité du linge, caractérisée en ce que les données représentatives de la charge introduite dans la cuve de la machine à laver pour un cycle de lavage à une date et une heure déterminée sont transmises depuis les moyens d'acquisition de l'unité de traitement vers un fichier de mémorisation de paramètres de traçabilité d'un automate de gestion des cycles de lavage de la machine à laver, une commande d'enregistrement étant envoyée à l'unité de traitement par l'automate de gestion lorsqu'un cycle de lavage est programmé

L'invention, avec ses caractéristiques et avantages, ressortira plus clairement à la lecture de la description faite en référence aux dessins annexés donnés à titre d'exemples non limitatifs dans lesquels :
- la figure 1 représente une vue en perspective d'une machine à laver équipée avec le dispositif de pesage selon l'invention,
- la figure 2 représente une vue en perspective d'un mode de réalisation du moyen de levage avec capteur de force,
- la figure 3 représente un exemple de schéma fonctionnel pour le processus de pesée,
- la figure 4 montre un exemple de schéma de connexion associé à l'unité de traitement,
- la figure 5 représente une vue en perspective d'une machine à laver pouvant intégrer le dispositif de pesage selon l'invention.

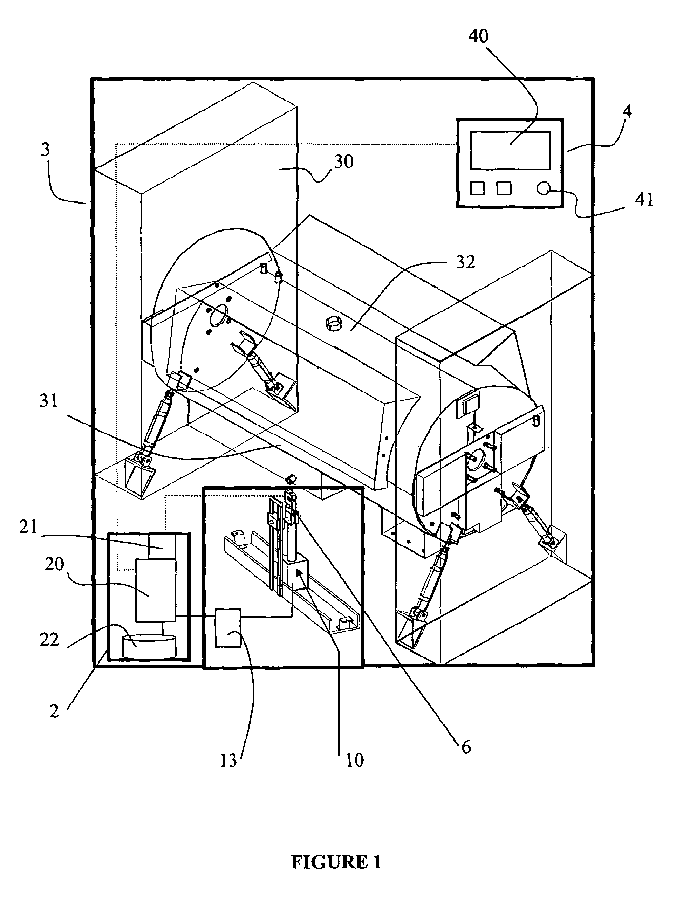

L'invention va être à présent décrite en référence aux figures 1, 2 et 5.

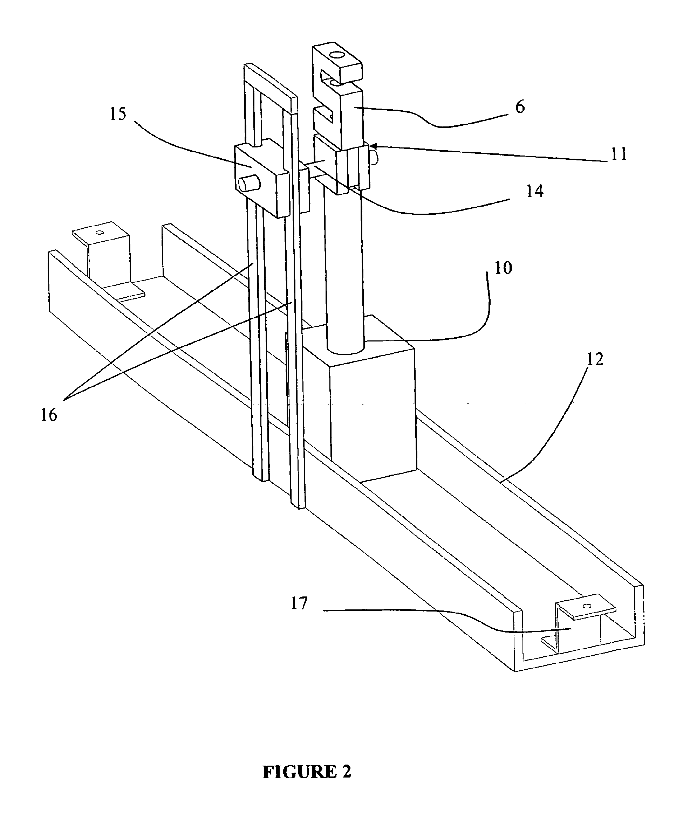

Le dispositif de pesage selon l'invention s'applique aux machines à laver (3) du type équipée d'une cuve surélevée (31). Comme illustré à la figure 1, le dispositif de pesage comprend un moyen de levage actionné par un organe de commande (13), un capteur de force (6) et une interface utilisateur (4) reliée à une unité de traitement (2). Dans un mode de réalisation de l'invention, le moyen de levage comporte un vérin à moteur électrique pourvu d'une vis sans fin commandé en montée et en descente par l'organe de commande (13). D'autres moyens de levage robustes peuvent naturellement être envisagés, par exemple un vérin hydraulique, un système à câble ou tout autre système connu. Comme présenté à la figure 2, ce moyen de levage a une extrémité libre (11) supérieure qui supporte le capteur de force (6). Il faut ici rappeler que la force est un vecteur et se caractérise par une amplitude, une direction et un point d'appui. Dans ce qui suit, le terme "force" employé dans l'expression « capteur de force » est employé pour désigner toute cause capable de produire, empêcher, modifier le mouvement d'un mécanisme, ou de le déformer.

Le capteur de force (6) est agencé de façon à être sensible à une composante verticale pour permettre la mesure du poids du linge chargé dans la cuve (31) de la machine à laver. L'ensemble formé par le vérin (10) et le capteur de force (6) est positionné sous la cuve (31). L'unité de traitement (2), pourvue d'au moins un microprocesseur (20), contrôle l'organe de commande (13) pour que le vérin (10) s'élève à partir d'une position basse vers une position haute déterminée où le capteur de force (6) est en appui par au moins un point d'appui avec le dessous de cuve (31). Selon la forme de réalisation illustrée à la figure 2, le vérin (10) à motorisation électrique est calé sur un support pourvu d'au moins un longeron (12) sensiblement horizontal et disposé par exemple longitudinalement ou en travers de la machine à laver (3). Le support comprend également un dispositif mobile (15) verticalement le long d'un ou plusieurs rails (16), le dispositif mobile (15) étant rendu solidaire de l'extrémité supérieure (11) du vérin (10) pour former un dispositif anti-rotation pour le vérin (10). La fixation du dispositif mobile (15) au vérin (10) peut s'effectuer avec notamment une tige de fixation (14) ou n'importe quel élément usuel de fixation.

La cuve (31) est suspendue à un châssis solidaire du bâti (30) par des moyen amortisseurs (35) et la disposition du capteur de force (6) est suffisamment éloignée du bas de la cuve (31) en position basse du vérin (10). Cette position du capteur (6) éloignée de la cuve (31) correspond à un déplacement supérieur au déplacement maximal de la cuve (31) permis par les moyens amortisseurs (35).

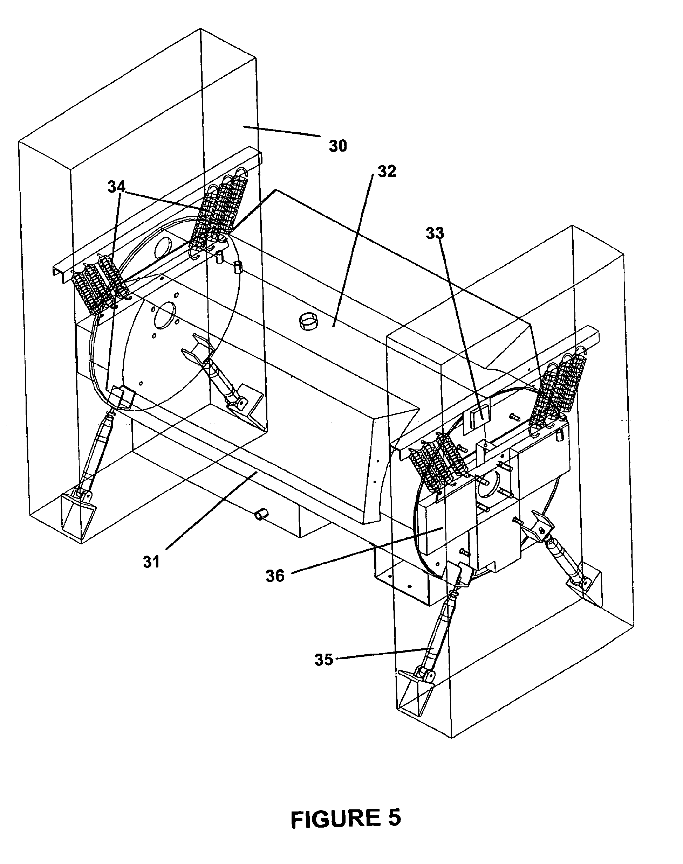

Le support du vérin (10) peut comprendre des moyens de fixation (17) au bâti (30) ou n'importe quel élément fixe de la machine à laver (3), afin de caler le vérin (10) lorsqu'il se met en contrainte en soulevant le capteur et la cuve (31). Les deux longerons (12) dans la figure 2 sont par exemple en acier inoxydable ou autre matériau de résistance analogue pour bloquer le vérin lors de la pesée. Comme illustré aux figures 1 et 5, la machine à laver (3) peut être du type équipée d'une pluralité d'amortisseurs (35) soutenant la cuve surélevée (31). Le tambour (32) est monté dans la cuve (31) qui est maintenue par des ressorts (34). On comprend que l'ensemble cuve (31) avec le tambour (32) possède un degré de liberté pour se déplacer verticalement, ce qui permet la pesée de cet ensemble. Plus la charge en linge placée dans la cuve (31) est lourde, plus le bas de la cuve descend sous l'effet du poids de l'ensemble. Dans le mode de réalisation de la figure 5, la machine à laver (3) est équipée en outre d'un détecteur de balourd (33) et d'un flanc contre-poids (36).

Selon l'invention, le capteur de force (6) est soulevé par le vérin (10) pour venir au contact du dessous de la cuve (31) lorsque celle-ci n'est pas encore chargée. Ensuite le chargement provoque une augmentation de la réaction du capteur (6) en réponse à l'augmentation du poids de la cuve et son contenu. Le capteur de force (6) ainsi disposé permet de mesurer la charge de linge qui est placée dans le tambour (32) de la machine à laver (3). Dans un mode de réalisation de l'invention, des moyens de conversion (21) sont connectés à une sortie électrique du capteur de force (6) pour transformer le signal représentatif du poids de la cuve avec son contenu délivré par le capteur (6) en des données représentatives de la charge introduite dans la cuve (31). Les données représentatives de la charge obtenues sont transmises à des moyens d'acquisition (22) de l'unité de traitement (2). Ces moyens d'acquisition (22) comprennent par exemple une mémoire pour stocker les données de charge du linge introduit dans le tambour (32) de la cuve (31). L'interface utilisateur (4) comprend un moyen d'affichage (40) d'informations représentatives de ces données de charge introduite pour informer en temps réel un opérateur sur la quantité de linge déjà introduite dans la machine (3). L'interface utilisateur comprend aussi des moyens de déclenchement (41) d'une pesée, actionnables lorsque le moyen de levage est dans la position basse. Ces moyens de déclenchement consistent par exemple en un bouton qui provoque une suite d'opérations conduisant à tarer la cuve (31) à vide.

Dans une variante de réalisation de l'invention, le capteur de force comprend un corps d'épreuve et au moins une jauge extensiométrique solidaire du corps d'épreuve pour mesurer la déformation mécanique de ce dernier. Dans la forme de réalisation des figures 1 et 2, le corps d'épreuve du capteur de force (6) est constitué d'un barreau en S. Une ou plusieurs jauges de contrainte active sont collées à ce corps d'épreuve pour mesurer la flexion du corps d'épreuve lorsque le vérin est dans la position haute. Le capteur de force (6) avec barreau en S est par exemple équipé de 4 jauges actives collées mesurant la flexion du corps d'épreuve. Un tel capteur (6) permet d'éliminer les phénomènes de friction et assure une grande répétabilité des mesures ainsi qu'une excellente précision, de l'ordre de 100g. Pour l'affichage du résultat de pesée sur l'interface utilisateur (4), la précision peut donc être amenée à 1 kg ou 0,1 kg. La résolution permise avec un tel capteur (6) est d'ailleurs extrêmement élevée. Les jauges utilisées peuvent être des jauges piézorésistives diffusées, à implantation ionique, en couche mince, épitaxiales. Le capteur de force (6) est suffisamment résistant pour équiper des machines à laver de grande capacité, acceptant une charge de linge de plus de 65 kg. Le capteur (6) comprend par exemple un corps d'épreuve apte à supporter une charge de l'ordre de 200 kg.

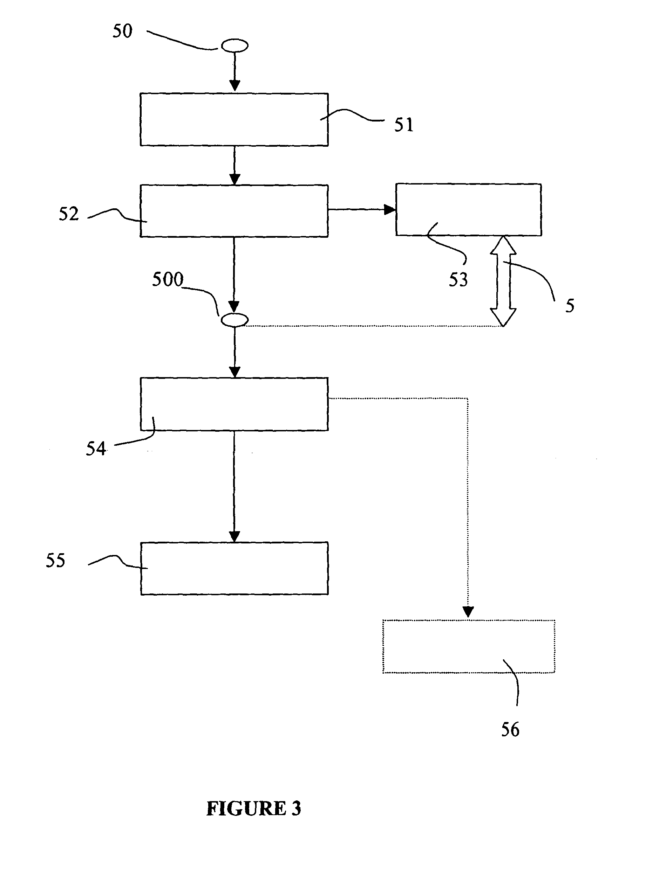

L'invention va être à présent décrite en liaison avec les figures 1 et 3.

Comme représenté schématiquement à la figure 3, le processus de pesée selon l'invention débute au préalable avec une étape (50) de commande initiale par utilisation des moyens de déclenchement de l'interface utilisateur (4). L'opérateur appuie par exemple sur un bouton (41) de commande pour déclencher ce processus. Ce bouton de commande (41) peut déclencher la seule fonctionnalité de pesée ou bien activer le démarrage d'un cycle de lavage commençant avec le processus de pesée selon l'invention.

Dans un mode de réalisation de l'invention, l'étape (50) de commande initiale fournit à l'organe de commande (13) un signal pour actionner la montée du vérin (10) initialement en position basse, le vérin étant déplacé jusqu'à une position haute déterminée correspondant sensiblement au niveau du dessous de la cuve, le capteur de force (6) disposé à l'extrémité du vérin (10) venant soulever la cuve (31). Dans un mode de réalisation de l'invention, l'étape (51) de montée du vérin (10) amène le capteur de force (6) en un point d'appui du dessous de la cuve (31). En variante, il peut être envisagé un capteur de force (6) à plusieurs branches pour venir en appui en différents endroits de la cuve. Une fois le vérin (10) placé en contrainte dans sa position haute, une étape (52) de tarage de la cuve (31) est effectuée par une première mesure du capteur (6) réalisée après écoulement d'un intervalle de temps déterminé à partir de la mise en appui du capteur de force (6) sous la cuve (31). Cet intervalle de temps est prévu pour que la position de la cuve (31) se stabilise. En effet, le contact du capteur (6) venant soulever la cuve (31) provoque des oscillations dues à la réaction des moyens de maintien de la cuve (31) constitués par les ressorts (34) et les amortisseurs (35). L'intervalle de temps correspond donc également au temps de stabilisation de la valeur mesurée pour le poids de la cuve avant chargement en linge. La durée de cet intervalle de temps peut être comprise par exemple entre 10 et 20 secondes.

Le capteur de force (6), une fois en contact avec la cuve (31), peut permettre de mesurer le poids de la cuve (31) et de son contenu. Le capteur (6) dispose par exemple d'une sortie électrique fournissant un signal de tension compris entre 0 et 10V pour représenter le poids exercé sur le capteur (6). Ce signal de tension est transformé de manière continue en données de charge par les moyens de conversion (21). Ainsi, lorsque le capteur (6) est en position haute, c'est le signal de tension est représentatif du poids de la cuve et son contenu, les données de charge correspondant à la masse soulevée. L'unité de traitement (2) comprend un programme d'exploitation des données de charge pour extraire, après écoulement de l'intervalle de temps déterminé prévu pour le tarage de la cuve à vide, la première mesure servant pour tarer la cuve. Ce programme permet, à partir de cette première mesure, de faire le zéro et ainsi d'afficher sur le moyen d'affichage (40) des mesures représentatives de la charge ajoutée dans la cuve (31). Dans une variante de réalisation de l'invention, cette première mesure peut être remplacée par une mesure moyenne calculée à partir d'une pluralité de mesures effectuées après l'intervalle de temps déterminé.

Selon le processus de l'invention, l'étape (5) de chargement du linge est réalisée après l'étape (53) de mise à zéro consécutive à l'étape (52) de tarage, comme illustré à la figure 3. L'étape (53) de mise à zéro consiste notamment à mettre à zéro l'affichage des données de charge sur le moyen d'affichage (40), ce qui permet ensuite à un opérateur de pouvoir contrôler en continu la quantité de charge introduite dans la machine à laver (3). La fin du chargement est détectée (500) par exemple par l'intermédiaire d'une fermeture d'une ou plusieurs portes de la machine à laver ou par actionnement d'un bouton de démarrage ou poursuite d'un cycle de lavage, ou une combinaison de ces événements. Le processus de pesée se poursuit après le chargement par une étape (54) de détermination par l'unité de traitement (2) de la charge introduite dans la cuve (31). Cette étape (54) comprend le traitement d'au moins une seconde mesure réalisée par le capteur de force (6) après la détection (500) de la fin du chargement et avant alimentation en eau. Cette seconde mesure permet donc la détermination de la charge de linge introduite. Cette seconde mesure peut naturellement correspondre à une mesure moyenne obtenue à partir d'une pluralité de mesures effectuées après détection (500) de la fin du chargement et avant alimentation en eau.

Le processus de pesée s'achève par une étape (55) de désengagement du capteur de force (6) par actionnement en descente du vérin (10) qui retrouve sa position basse initiale. Un cycle de lavage normal peut alors être réalisé. Une étape (56) de dosage de la quantité d'eau et/ou de produits lessiviels peut être réalisé à ce stade en utilisant la valeur de la charge de linge introduite dans la cuve (31) déterminée lors de l'étape (54) de détermination de charge. La charge déterminée avant alimentation en eau est prise en compte par un automate de gestion des cycles de lavage de la machine à laver pour calculer la quantité d'eau et éventuellement la quantité de produits lessiviels à fournir et optimiser ainsi le rapport de charge. Les quantités d'eau et de produits lessiviels peuvent ainsi être ajustées en fonction du poids du linge. Les doses prévues pour une charge maximale peuvent ainsi être diminuées lorsque la charge de linge est en réalité inférieure à la capacité de la machine. Dans un mode de réalisation de l'invention, l'automate de gestion des cycles de lavage de la machine à laver peut très bien intégrer l'unité de traitement (2).

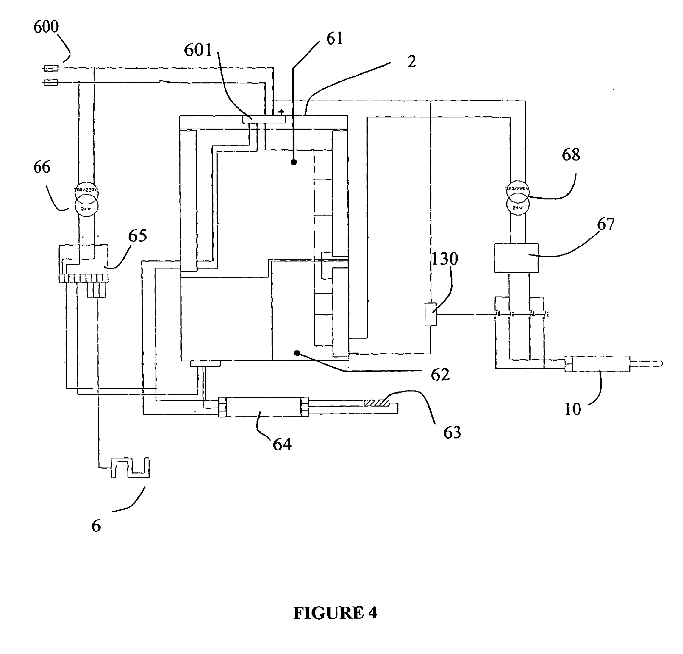

L'invention va être à présent décrite en référence aux figures 1 et 4.

Dans un mode de réalisation, le processus de pesée permet de conserver des paramètres relatifs à la charge de linge. L'enregistrement de paramètres de charge obtenus avec le dispositif selon l'invention ainsi qu'éventuellement des paramètres de fonctionnement comme la température permet la constitution d'un système de traçabilité pour machine à laver. On comprend donc que le dispositif puisse être utilisé dans un tel système, les données représentatives de la charge introduite dans la cuve (31) à une date et une heure déterminée étant transmises depuis les moyens d'acquisition (22) de l'unité de traitement (2) vers un fichier de mémorisation de paramètres de traçabilité d'un automate de gestion des cycles de lavage de la machine à laver. Une commande d'enregistrement est par exemple envoyée à l'unité de traitement par l'automate de gestion lorsqu'un cycle de lavage est programmé. Dans un mode de réalisation de l'invention, l'automate peut très bien intégrer l'unité de traitement (2).

La figure 4 présente un exemple de schéma de connexion pouvant être associé à l'unité de traitement (2), avec le capteur de force (6) pour recueillir des données de charge et une sonde de température (63) couplée à un convertisseur de température (64). La sonde de température est par exemple du type Pt100. Dans la variante de réalisation de la figure 4, le capteur de force (6) est relié à un conditionneur de signal (65) lui-même alimenté avec du courant unidirectionnel par un transformateur redresseur (66). L'unité de traitement (2) comprend une interface d'alimentation par exemple connectée aux sources d'énergie (600) qui alimentent le transformateur redresseur (66). L'unité (2) comporte deux cartes électroniques de traitement (61, 62), la première carte (61) étant du type à entrée/sortie et recevant des données du capteur de force (6) et du convertisseur de température (64) par son interface d'entrée. Ces données peuvent par exemple être transmises depuis l'unité de traitement vers le dispositif d'affichage (4) et stockées dans les moyens d'acquisition (22). La deuxième carte (62) comprend une interface de sortie pour permettre de contrôler la commande du vérin (10). Cette deuxième carte pilote un relais d'inversion de marche (130) du vérin, ce dernier (10) étant alimenté en courant unidirectionnel lors de l'étape de montée (51) ou de désengagement (55) par une carte redresseur (67) reliée à un transformateur (68).

Un des avantages du dispositif selon l'invention réside dans la facilité de l'intégrer à une machine à laver de blanchisserie En outre, le dispositif est complètement séparable de la cuve, le vérin n'étant levé que pour le temps de la pesée, avant le démarrage du cycle normal de lavage.

Un autre des avantages de l'invention est de permettre de ne peser que la cuve et ce qu'elle contient, et non pas l'ensemble de la machine à laver.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif de pesage pour machine à laver (3) du type équipée d'une cuve surélevée (31) ayant un degré de liberté selon une composante verticale, ledit dispositif comprenant un moyen de levage actionné par un organe de commande (13), un capteur de force (6) et une interface utilisateur (4) reliée à une unité de traitement (2), **caractérisé en ce que** le moyen de levage comprend une extrémité libre (11) supérieure supportant le capteur de force (6), l'unité de traitement (2) contrôlant l'organe de commande (13) pour que le moyen de levage s'élève d'une position basse à une position haute déterminée où le capteur de force (6) est en appui par au moins un point d'appui avec le dessous de cuve (31) de la machine à laver (3), des moyens de conversion (21) étant connectés à une sortie électrique du capteur de force (6) pour transformer un signal représentatif du poids de la cuve avec son contenu en des données représentatives de la charge introduite dans la cuve (31), les données représentatives de la charge étant transmises à des moyens d'acquisition (22) de l'unité de traitement (2).

2. Dispositif de pesage selon la revendication 1, dans lequel le moyen de levage comporte un vérin (10) à moteur électrique pourvu d'une vis sans fin commandé en montée et en descente par l'organe de commande (13).

3. Dispositif de pesage selon la revendication 2, dans lequel le vérin (10) électrique est calé sur un support pourvu d'au moins un longeron (12) sensiblement horizontal et d'un dispositif mobile (15) verticalement le long d'au moins un rail (16), le dispositif mobile (15) étant rendu solidaire de l'extrémité supérieure (11) du vérin (10) pour former un dispositif anti-rotation pour le vérin (10).

4. Dispositif de pesage selon l'une quelconque des revendications 1 à 3, dans lequel le capteur de force (6) comprend un corps d'épreuve et au moins une jauge extensiométrique solidaire du corps d'épreuve pour mesurer la déformation mécanique de ce dernier.

5. Dispositif de pesage selon l'une quelconque des revendications 1 à 3, dans lequel le capteur de force (6) comprend un corps d'épreuve constitué d'un barreau en S auquel est collée au moins une jauge de contrainte active mesurant la flexion du corps d'épreuve.

6. Dispositif de pesage selon l'une quelconque des revendications 1 à 5, dans lequel l'interface utilisateur comprend un moyen d'affichage (40) d'informations représentatives des données de charge introduite et des moyens de déclenchement (41) d'une pesée actionnables lorsque le moyen de levage est dans une position basse.

7. Dispositif de pesage selon l'une quelconque des revendications 1 à 6, dans lequel la sortie électrique du capteur de force (6) fournit un signal de tension, compris entre 0 et 10V, représentatif du poids exercé sur le capteur (6), le signal de tension étant transformé de manière continue en données de charge par les moyens de conversion (21), l'unité de traitement (2) comprenant un programme d'exploitation des données de charge pour extraire une première mesure après écoulement d'un intervalle de temps déterminé prévu pour le tarage de la cuve (31) à vide, puis utiliser cette première mesure pour faire le zéro et permettre d'afficher sur le moyen d'affichage (40) des mesures représentatives de la charge ajoutée dans la cuve (31).

8. Dispositif de pesage selon l'une quelconque des revendications 1 à 7, dans lequel la cuve (31) est suspendue à un châssis par des moyen amortisseurs (35) et la disposition du capteur de force (6) en position basse du moyen de levage correspond à un déplacement supérieur au déplacement maximal de la cuve (31) permis par les moyens amortisseurs (35).

9. Procédé de pesage pour machine à laver du type équipée d'une cuve surélevée ayant un degré de liberté selon une composante verticale, mis en oeuvre par l'intermédiaire du dispositif de pesage selon l'une quelconque des revendications 1 à 8, ledit procédé étant **caractérisé en ce qu'**il comprend avant le chargement de la machine à laver (3) les étapes successives suivantes :
- utilisation de l'interface utilisateur (4) par un opérateur pour déclencher une pesée,
- montée du moyen de levage actionné par l'organe de commande (13) vers une position haute déterminée pour amener le capteur de force (6) en appui par au moins un point d'appui avec le dessous de cuve (31) de la machine à laver (3),
- tarage de la cuve (31) par au moins une première mesure du capteur (6) réalisée après écoulement d'un intervalle de temps déterminé à partir de la mise en appui du capteur de force (6) sous la cuve (31), la première mesure étant utilisée par l'unité de traitement (2) pour mettre à zéro des informations représentatives des données de charge introduite dans la cuve (31), les données de charge étant affichées sur un moyen d'affichage de l'interface utilisateur (4),
puis après chargement de la machine à laver (3) et avant alimentation en eau, une étape de détermination par l'unité de traitement (2) de la charge introduite dans la cuve (31) par traitement d'au moins une seconde mesure réalisée par le capteur de force (6), et une étape de désengagement du capteur de force (6) par actionnement en descente du moyen de levage.

10. Procédé de pesage selon la revendication 9, dans lequel la charge déterminée avant alimentation en eau est prise en compte par un automate de gestion des cycles de lavage de la machine à laver (3) pour calculer la quantité d'eau à fournir et optimiser ainsi le rapport de charge.

11. Procédé de pesage selon la revendication 9 ou 10, dans lequel l'intervalle de temps déterminé correspond sensiblement au temps de stabilisation de la valeur mesurée pour le poids de la cuve (31) avant chargement.

12. Utilisation du dispositif de pesage selon l'une quelconque des revendications 1 à 8 dans un système de traçabilité du linge, **caractérisée en ce que** les données représentatives de la charge introduite dans la cuve (31) de la machine à laver (3) à une date et une heure déterminée sont transmises depuis les moyens d'acquisition (22) de l'unité de traitement (2) vers un fichier de mémorisation de paramètres de traçabilité d'un automate de gestion des cycles de lavage de la machine à laver (3), une commande d'enregistrement étant envoyée à l'unité de traitement (2) par l'automate de gestion lorsqu'un cycle de lavage est programmé.

## Claims

1. Weighing device for a washing machine (3) of the type equipped with an elevated tub (31) having a degree of freedom along a vertical component, said device comprising a lifting means actuated by a control member (13), a force sensor (6) and a user interface (4) connected to a processing unit (2), **characterised in that** the lifting means comprises an upper free end (11) supporting the force sensor (6), the processing unit (2) controlling the control member (13) so that the lifting means rises from a low position to a given high position where the force sensor (6) bears by at least one bearing point on the lower part of the tub (31) of the washing machine (3), conversion means (21) being connected to an electric output of the force sensor (6) in order to transform a signal representing the weight of the tub together with its contents into data representing the load introduced into the tub (31), the data representing the load being transmitted to acquisition means (22) of the processing unit (2).

2. Weighing device according to Claim 1, in which the lifting means comprises a jack (10) with an electric motor provided with an endless screw controlled in upward and downward motion by the control member (13).

3. Weighing device according to Claim 2, in which the electric jack (10) is clamped to a support provided with at least one substantially horizontal main beam (12) and with a device (15) that is vertically mobile along at least one rail (16), the mobile device (15) being made integral with the upper end (11) of the jack (10) so as to form an anti-rotation device for the jack (10).

4. Weighing device according to any one of Claims 1 to 3, in which the force sensor (6) comprises a proof body and at least one extensiometric gauge integral with the proof body for measuring the mechanical deformation of the latter.

5. Weighing device according to any one of Claims 1 to 3, in which the force sensor (6) comprises a proof body constituted by an S-shaped bar to which at least one active strain gauge measuring the bending of the proof body is stuck.

6. Weighing device according to any one of Claims 1 to 5, in which the user interface comprises a means (40) for displaying information representing intmduced-load data and means (41) for triggering a weighing operation that can be actuated when the lifting means is in a low position.

7. Weighing device according to any one of Claims 1 to 6, in which the electric output of the force sensor (6) supplies a voltage signal, comprised between 0 and 10 V, representing the weight exerted on the sensor (6), the voltage signal being transformed constantly into data on load by the conversion means (21), the processing unit (2) comprising a programme for exploiting the load data in order to extract a first measurement after the elapsing of a given period of time provided for calibrating the tub (31) when empty, then using this first measurement for zeroing and getting the display means (40) to display measurements representing the load added to the tub (31).

8. Weighing device according to any one of Claims 1 to 7, in which the tub (31) is suspended from a frame by damping means (35) and the arrangement of the force sensor (6) in the low position of the lifting means corresponds to a displacement greater than the maximum displacement of the tub (31) permitted by the damping means (35).

9. Weighing method for a washing machine of the type equipped with an elevated tub having a degree of freedom along a vertical component, implemented by means of the weighing device according to any one of Claims 1 to 8, said method being **characterised in that** it comprises, before the loading of the washing machine (3), the following successive steps:
- use of the user interface (4) by an operator to start a weighing operation,
- upward motion of the lifting means actuated by the control member (13) towards a given high position in order to bring the force sensor (6) to bear at at least one bearing point on the lower part of the tub (31) of the washing machine (3),
- calibration of the tub (31) by at least one first measurement by the sensor (6) performed after a given period of time has elapsed from the time that the force sensor (6) is brought to bear under the tub (31), the first measurement being used by the processing unit (2) to zero the information representing the data on the load introduced into the tub (31), the load data being displayed on a display means of the user interface (4),
- then, after the washing machine (3) has been loaded and before water is supplied, a step in which the processing unit (2) determines the load introduced into the tub (31) by processing at least one second measurement made by the force sensor (6), and a step in which the force sensor (6) is disengaged by downward actuation of the lifting means.

10. Weighing method according to Claim 9, in which account is taken of the load determined before water is supplied by an automated unit for managing the wash cycles of the washing machine (3) in order to calculate the amount of water to be supplied and thus optimise the load ratio.

11. Weighing method according to Claim 9 or 10, in which the given period of time corresponds substantially to the time needed for stabilisation of the measured value for the weight of the tub (31) before loading.

12. Use of the weighing device according to any one of Claims 1 to 8 in a linen traceability system, **characterised in that** the data representing the load introduced into the tub (31) of the washing machine (3) on a given date and time are transmitted from the acquisition means (22) of the processing unit (2) to a file storing traceability parameters of an automated unit for managing the wash cycles of the washing machine (3), a record command being sent to the processing unit (2) by the automated management unit when a wash cycle is programmed.

## Patentansprüche

1. Einrichtung zum Wiegen für eine Waschmaschine (3) vom Typ mit hochgestellter Waschtrommel (31), die einen einer vertikalen Komponenten entsprechenden Freiheitsgrad aufweist, wobei die o. g. Einrichtung eine von einem Steuerorgan (13) betätigte Hebevorrichtung, einen Kraftwandler (6) und eine mit einer Ablaufsteuereinheit (2) verbundene Benutzerschnittstelle (4) umfasst, **dadurch gekennzeichnet, dass** die Hebevorrichtung einen freien oberen Ansatz (11) aufweist, die den Kraftwandler (6) trägt, und die Ablaufsteuereinheit (2) das Steuerorgan (13) zum Anheben der Hebevorrichtung aus einer tiefen Stellung in eine vorbestimmte hohe Stellung steuert, in der der Kraftwandler (6) in mindestens einem Stützpunkt den unteren Teil der Waschtrommel (31) der Waschmaschine (3) berührt, wobei Wandlerinstrumente (21) an einen elektrischen Anschluss des Kraftwandlers (6) angeschlossen sind, um ein für das Gewicht der Waschtrommel samt ihrem Inhalt kennzeichnendes Signal in kennzeichnende Daten für die in die Waschtrommel (31) eingeführte Ladung umzuwandeln, wobei diese die Ladung kennzeichnenden Daten den Verarbeitungsmitteln (22) der Ablaursteuereinheit (2) zugeführt werden.

2. Einrichtung zum Wiegen nach Anspruch 1, wobei die Hebevorrichtung aus einer Hebereinrichtung (10) mit Elektromotor besteht, die mit einer Endlosschraube versehen ist, die beim Auf- und Absteigen von dem Steuerorgan (13) gesteuert wird.

3. Einrichtung zum Wiegen nach Anspruch 2, wobei die elektrische Hebeeinrichtung (10) auf einem Träger befestigt ist, der mit mindestens einem im Wesentlichen horizontalen Holm (12) und einer auf der Vertikalen entlang mindestens einer Schiene beweglichen Vorrichtung (15) versehen ist, wobei die bewegliche Vorrichtung (15) mit dem oberen Ansatz (11) der Hebeeinrichtung (10) fest verbunden ist, um eine Antirotations-Vorrichtung für die Hebeeinrichtung (10) zu bilden.

4. Einrichtung zum Wiegen nach einem der Ansprüche 1 bis 3, wobei der Kraftwandler (6) einen Probekörper und mindestens einen mit dem Probekörper fest verbundenen extensiometrischen Prüfstab beinhaltet, um die mechanische Verformung von Letzterem zu messen.

5. Einrichtung zum Wiegen nach einem der Ansprüche 1 bis 3, wobei der Kraftwandler (6) einen Probekörper umfasst, der aus einem S-förmigen Stab besteht, mit dem mindestens ein aktives Tensiometer, das die Biegung des Probekörpers misst, verbunden ist.

6. Einrichtung zum Wiegen nach einem der Ansprüche 1 bis 5, wobei die Benutzerschnittstelle ein Anzeigeteil (40) für kennzeichnende Informationen über die Daten der eingeführten Ladung sowie Auslösemittel (41) eines Wiegevorgangs, die im Moment, wenn sich die Hebevorrichtung in einer tiefen Stellung befindet, betätigt werden können, umfasst.

7. Einrichtung zum Wiegen nach einem der Ansprüche 1 bis 6, wobei der elektrische Anschluss des Kraftwandlers (6) ein Spannungssignal zwischen 1 und 10 V liefert, das für das auf den Kraftwandler (6) einwirkende Gewicht kennzeichnend ist, wobei das Spannungssignal kontinuierlich mittels der Wandlerinstrumente (21) in der Ladung entsprechende Daten umgewandelt wird, wobei die Ablaufsteuereinheit (2) ein Programm zur Verarbeitung der der Ladung entsprechende Daten umfasst, um eine erste Messung nach Ablauf eines für die Austarierung der leeren Waschtrommel (31) vorgesehenen vorbestimmten Zeitintervalls auszuführen, um dann diese erste Messung zur Nulleinstellung zu verwenden und somit auf dem Anzeigeteil (40) für die der Waschtrommel (31) zugeführte Ladung kennzeichnende Messungen anzuzeigen.

8. Einrichtung zum Wiegen nach einem der Ansprüche 1 bis 7, wobei die Waschtrommel (31) an einem Chassis mittels Dämpfungselementen (35) aufgehängt ist, und die Anordnung des Kraftwandlers (6) in der tiefen Stellung der Hebevorrichtung einer über die maximale von den Dämpfungselementen (35) erlaubten Verschiebung der Waschtrommel (31) hinausgehenden Verschiebung entspricht.

9. Verfahren zum Wiegen für eine Waschmaschine vom Typ mit hochgestellter Waschtrommel, die einen einer vertikalen Komponenten entsprechenden Freiheitsgrad aufweist, mit einer Wiegeeinrichtung nach einem der Ansprüche 1 bis 8, wobei das genannte Verfahren **dadurch gekennzeichnet ist, dass** es dem Beladen der Waschmaschine (3) vorausgehend die folgenden Schritte umfasst:
- Verwendung der Benutzerschnittstelle (4) durch einen Betreiber, um einen Wiegevorgang auszulösen,
- Anheben der vom Steuerorgan (13) betätigten Hebevorrichtung in eine vorbestimmte hohe Stellung zum Heranführen des Kraftwandlers (6) zu mindestens einem Stützpunkt mit dem unteren Teil der Waschtrommel (31) der Waschmaschine (3),
- Austarieren der Waschtrommel (31) durch mindestens eine nach Ablauf eines vorbestimmten Zeitintervalls ausgeführte erste Messung des Wandlers (6), ausgehend vom Zeitpunkt der Abstützung des Kraftwandlers (6) unter der Waschtrommel (31), wobei die erste Messung von der Ablaufsteuereinheit (2) zur Nulleinstellung der Daten, welche für die in die Waschtrommel (31) eingeführte Ladung kennzeichnend ist, verwendet wird, wobei die für die Ladung kennzeichnenden Daten auf einer Anzeige der Benutzerschnittstelle (4) angezeigt werden,
- nach dem Beladen der Waschmaschine (3) und vor der Wasseraufnahme einen Schritt zur Bestimmung der in die Waschtrommel (31) eingeführten Ladung durch die Ablaufsteuereinheit (2) durch Verarbeitung von mindestens einer zweiten, vom Kraftwandler (6) ausgeführten Messung und einen Schritt zur Trennung des Kraftwandlers (6) durch Absenken der Hebevorrichtung.

10. Verfahren zum Wiegen nach Anspruch 9, wobei die vor der Wasseraufnahme bestimmte Ladung von einem automatischen System zur Verwaltung der Waschzyklen der Waschmaschine (3) erfasst wird, um die aufzunehmende Wassermenge zur Optimierung des Ladungsverhältnisses zu berechnen.

11. Verfahren zum Wiegen nach Anspruch 9 oder 10, wobei das vorbestimmte Zeitintervall möglichst genau der Dauer des Einpendelns des für das Gewicht der Waschtrommel (31) vor dem Beladen gemessenen Wertes entspricht.

12. Verwendung der Einrichtung zum Wiegen nach einem der Ansprüche 1 bis 8 bei einem Wäscheerkennungssystem, **dadurch gekennzeichnet, dass** die der in die Waschtrommel (31) der Waschmaschine (3) zu einem bestimmten Datum und einer bestimmten Uhrzeit eingeführt Ladung entsprechenden Daten, von den Aufnahmemitteln (22) der Ablaufsteuereinheit (2) einer Speicherdatei für Erkennungsparameter eines automatischen Systems zur Verwaltung der Waschzyklen der Waschmaschine (3) zugeführt werden, wobei ein Registrierbefehl von dem automatischen Verwaltungssystem zur Ablaufsteuereinheit (2) in dem Zeitpunkt versandt wird, wenn ein Waschzyklus programmiert wird.
